# EUROPEAN PATENT SPECIFICATION

(11) **EP 1 559 533 B1**
(45) Date of publication and mention of the grant of the patent: **02.06.2010**
(21) Application number: 04075260.2
(22) Date of filing: 28.01.2004
(51) Int. Cl.: B29C 70/46

(54) **Method for making preforms of fibrous sheet material**
Verfahren zur Herstellung von Vorformlingen aus faserigem Schichtmaterial
Procédé pour la fabrication de preformes de matière fibreuse en feuille

(43) Date of publication of application: 03.08.2005
(73) Proprietor: Lightweight Structures B.V., 2629 HG Delft (NL)
(72) Inventor: Nederveen, Peter Jacobus, 3053 JA Rotterdam (NL); Labordus, Maarten, 2624 XL Delft (NL)
(74) Representative: Prins, Adrianus Willem

(56) References cited:
- EP-A- 0 239 550
- CA-A- 1 013 527
- US-A- 6 004 123
- US-A1- 2001 005 061
- US-A1- 2001 045 684

## Description

### FIELD OF THE INVENTION

The invention refers to a method for making spatial forms having more or less sharp edges, to be formed from mainly plane fibrous material.

### BACKGROUND OF THE INVENTION

Fibrous material (woven or non-woven, crimp or non-crimp) may be treated with a so-called preforming or binder material. Such a preforming material may e.g. comprise a thermoplastic or partially cured epoxy powder which is applied to the outer surface of the fibrous material (coating) and/or between its fibres (impregnation). Hereinafter this kind of material will be indicated by the acronym PFS, which stands for "Pre-treated Fibrous Sheet (material)".

According to a known method to manufacture three-dimensional forms made by PFS, one or more PFS layers may be laid in or upon an (inner or outer) mould, vacuum bagged by means of e.g. a cover foil, and heated to typically 120-180°C. Additional pressure to the moulding may be provided by an autoclave (effectively a pressurized oven) which can apply up to 5 atmospheres to the layer(s). After cooling down the resulting rigid form may be take from the mould and put into e.g. an injection mould, serving as a preformed fibre-reinforcement backbone for a synthetic resin component for e.g. aircraft (wings, tail sections etc.), F1 racing cars, sporting goods such as tennis racquets and skis etc.

Drawbacks of the known method are a long cycle time, difficulties to set-up a flow-directed production and the vacuum bagging step, especially vacuum-tight covering the PFS laying upon the mould surface, which is a specialistic and risk full work. Furthermore, by applying pressure, the in-plane movement of the PFS layers is restricted due to frictional forces. These in-plane movements like interply slip, shearing of fibres or stretching of layers are needed to allow the formation of a three dimensional preform. The restriction of in-plane movement normally leads to geometrical problems like folds and fibre bridging in negative radii. During the subsequent injection step, this will lead to problems with mould-closing or unwanted runner channels for the resin.

Document US 6004123 discloses the preamble of claim 1.

### SUMMARY OF THE INVENTION

The invention is based on the observation that layers of PFS need to be deformed to a desired three dimensional shape prior to the application of a normal pressure which would lead to undesirable frictional forces, restricting the deformation. As a result of those observations two implementations have been developed for manufacturing spatial forms having more or less sharp edges (and/or comers), to be formed from mainly plane PFS, in the following way:
- Place the PFS between an inner mould having outer edges and a further outer shape that correspond to the inner ones (edges and shape respectively) of the desired spatial form of the PFS and solid pressing means;
- Press the PFS around the inner mould's outer edges and subsequently press the PFS around the inner mould's further outer shape. By applying heat, the preform is consolidated.

As far as the deformation mechanisms can be observed and understood, especially pressing the PFS around the inner mould's outer edges may be coupled with shearing and/or shifting and/or sliding of the constituting fibres and/or fibre layers without, however, damaging those fibres. The same seems to apply at subsequently pressing the PFS around the inner mould's further outer shape.

As far as can be understood, it is preferred that pressing the PFS around the inner mould's further outer shape should be preceded by pressing the PFS around the inner mould's outer edges, to prevent bulging etc. of the constituting sheet material.

Preferably, pressing the PFS around the inner mould's outer edges may be performed by means of moving an outer solid mould, or parts of it, towards the inner mould's edges, while, preferably, pressing the PFS around the inner mould's further outer shape may be enabled by continuing the movement of the outer mould or parts thereof relative to the inner mould, until the desired spatial form has been reached.

The outer mould may comprise pivotal parts which may be moved around said outer edges of the inner mould, having the PFS between them. Use of pivotal parts, pressing ("folding") the PFS towards the inner mould form, appears to fulfill, as far as can be seen and understood, the preferred sequence to press the PFS around the inner mould's outer edges at first, to be followed by pressing the PFS around the inner mould's further outer shape. A restriction of the use of pivotal pressing parts is that only rather straight shapes can be made in that way.

### FIGURES

Figure 1 illustrates the proposed method, using a first option.
Figure 2 illustrates a second option, not part of the invention.
Figures 3 and 4 illustrate the respective resulting PFS products.

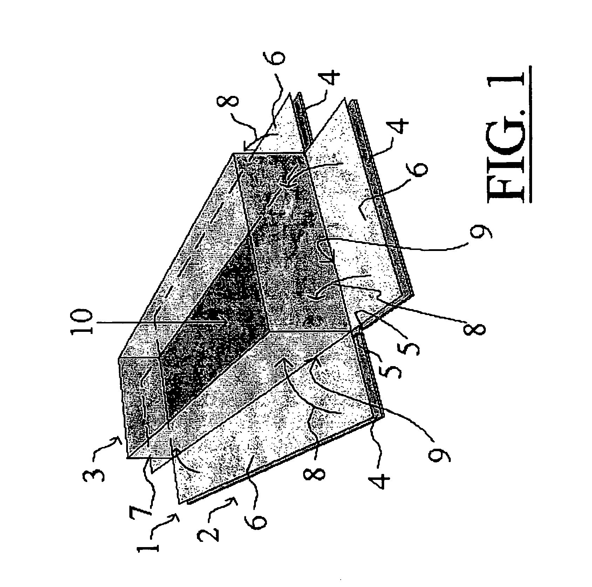

Figure 1 shows a device in which the method for making spatial forms having more or less sharp edges, to be formed from a mainly plane fibrous sheet material (PFS) 1 (pre-)treated with a binder material, may be performed.

The PFS 1 preferably will be cut into a form that corresponds with the intended product: in figure 1. The sheet comprises a bottom part (not seen) below the bottom side of an inner mould 3 and side parts 6, which may be pressed up by solid flaps 4 of an outer mould 2. Additional pieces of sheet may optionally be affixed to the vertical edges of the inner mould 3 to achieve a good connection between the adjacent sheet flaps 6 after the deformation process.

The sheet 1 is to be placed between the inner (solid) mould 3 (which may be hollow as the figure shows) having outer edges 9 and a further outer shape that corresponds to the inner one of the desired spatial form of the PFS, and (solid) pressing means, here in the form of the outer mould 2, with pivotal flaps 4 which may be operated manually or by a mechanical drive. Firstly the outer and the inner mould are pressed upon each other, as indicated by arrow 10. The flaps 4 of outer mould 2 are movable (see arrows 8) around pivots 5 (e.g. some kind of "piano hinge") thus achieving that the side parts 6 of PFS 1 are carefully bent or folded under pressure of those flaps 4 around the outer edges of the inner mould 3 without the sheet 1 being bulged or rolled-up.

Continuing the movement 8 of the outer mould's flaps 4, the flaps 4 will press the PFS around the inner mould's further outer shape until the desired spatial form has been reached completely.

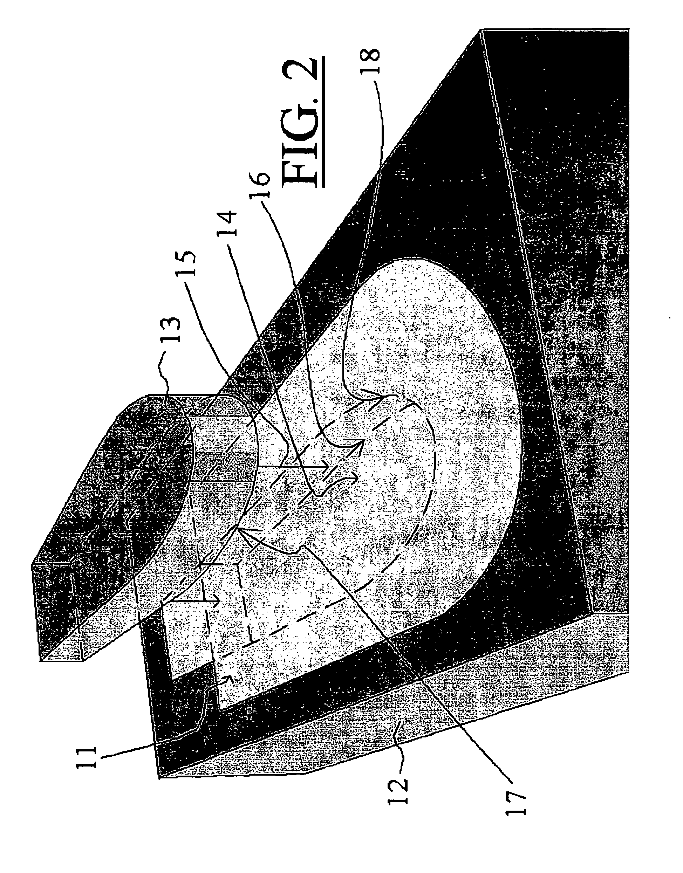

When the spatial form of the product to be made is not fit to use pivotal flaps, e.g. due to a curved part of that form, a method, not part of the invention, may be performed using an inner and an outer mould being moved relative to each other perpendicular to the PFS's plane, as illustrated in figure 2. Figure 2 shows an outer mould 12, comprising a chamber 14, comprising fixed inner edges 16 and a further inner shape which corresponds to the desired spatial form of the PFS 11. The outer mould 12 and an inner mould 13 are moved (see arrows 15) relative to each other perpendicularly to the PFS's plane. The inner mould 13 has outer edges 17 and a further outer shape that correspond to the inner ones of the desired spatial form of the PFS. The undeformed PFS 11 preferably will be cut in a form that will result, after forming, in the desired spatial form. Due to the occurring shearing of the fibres during forming, the dimensions of the undeformed PFS 11 will have to be matched to the fibre orientations. After that the PFS 11 is put between the inner mould 13 and the outer mould 12. The inner mould 13 then is moved into the hollow chamber 14 of outer mould 12, pressing the sheet 11 between the outer edges (comers) 17 and sides of the inner mould 13 and the edges 16 and 18 and sides of the outer mould's chamber 14 without -due to the dragging and/or stretching forces applied upon the deforming sheet- being bulged or rolled-up. Continuing the movement 15 of the inner and outer moulds towards another the inner shape of the outer mould's chamber 14 will press further the PFS around the inner mould's outer shape until the desired spatial form has been reached completely.

Performing the method by the means as illustrated in figure 1, spatial forms can be made of a PFS in an efficient way, which products excel by their sharp edges and further shapes, having no bulges etc.

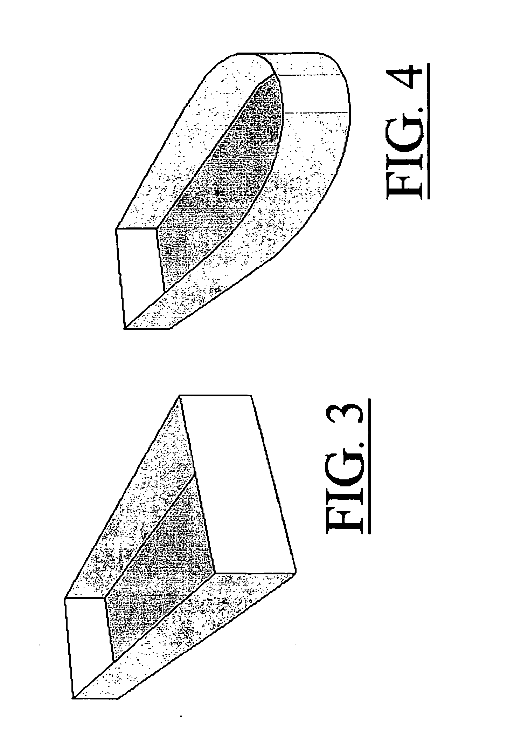

Self-explaining figure 3 illustrates the product, made according the method and means illustrated in figure 1. .

Finally, it is noted that, of course, the edges 17 and 18 will have to be smooth in some extend, to facilitate the deformation process of the sheet 11, sliding and/or bending around those edges 17 and 18 during the displacement 15 of both moulds 12 and 13 towards another.

## Claims

1. Method for making preforms having sharp edges, to be formed from a mainly plane fibrous material including fibre layers, treated with a preforming or binder material, hereinafter called a PFS, the method comprising the steps of:
- placing the PFS (1) between an inner mould (3) having outer edges (9) and a further outer shape that corresponds to the inner ones of the desired spatial form of the PFS and solid pressing means (4); **characterized by**
- pressing the PFS around the inner mould's outer edges while allowing fibre layers to slide;
- subsequently pressing the PFS around the inner mould's further outer shape, and consolidating the preform by applying heat,
wherein said pressing the PFS around the inner mould's outer edges is performed by moving (8,10) an outer mould (1) or parts (4) thereof towards the inner mould's edges (9) and wherein pressing the PFS around the inner mould's further outer shape is performed by moving (8,10) the outer mould (1) or parts thereof (4) relative to the inner mould until the desired spatial form has been reached.

2. Method according to claim 1, the outer mould comprising pivotal parts (4) which are moved around said outer edges of the inner mould, having the PFS between them.

## Patentansprüche

1. Verfahren zur Herstellung von Vorformlingen, die scharfe Ränder haben und die aus einem hauptsächlich ebenen faserigen Material auszubilden sind, das Faserschichten enthält und mit einem Vorform- oder Bindematerial behandelt ist und das im Folgenden ein PFS genannt wird, wobei das Verfahren die folgenden Schritte aufweist:
- Anordnen des PFS (1) zwischen einem inneren Formwerkzeug (3), das äußere Ränder (9) und eine weitere äußere Form hat, die den inneren der gewünschten räumlichen Form des PFS entspricht, und einem festen Pressmittel (4), **gekennzeichnet durch**
- Pressen des PFS um die äußeren Ränder des inneren Formwerkzeugs, während es Faserschichten ermöglicht wird, zu gleiten,
- anschließend Pressen des PFS um die weitere äußere Form des inneren Formwerkzeugs und Verfestigen des Vorformlings **durch** Anwenden von Wärme, wobei das Pressen des PFS um die äußeren Ränder des inneren Formwerkzeugs durchgeführt wird, indem ein äußeres Formwerkzeug (1) oder Teile (4) von diesem in Richtung auf die Ränder (9) des inneren Formwerkzeugs bewegt wird bzw. werden (8, 10), und wobei das Pressen des PFS um die weitere äußere Form des inneren Formwerkzeugs durchgeführt wird, indem das äußere Formwerkzeug (1) oder Teile von diesem (4) in Bezug auf das innere Formwerkzeug bewegt wird bzw. werden (8, 10), bis die gewünschte räumliche Form erreicht worden ist.

2. Verfahren nach Anspruch 1, bei dem das äußere Formwerkzeug schwenkbare Teile (4) aufweist, die um die äußeren Ränder des inneren Formwerkzeugs bewegt werden, wobei das PFS zwischen ihnen angeordnet ist.

## Revendications

1. Procédé de fabrication de préformes présentant des arêtes vives, à partir d'un matériau fibreux essentiellement plan comprenant des couches de fibres, traité avec un agent de préformage ou agent liant, ci-après dénommé nappe de fibres prétraitée, ledit procédé comprenant les étapes consistant à :
- placer la nappe de fibres prétraitée (1) entre un moule interne (3) présentant des bords extérieurs (9) ainsi qu'une forme extérieure correspondant aux formes et bords intérieurs de la forme tridimensionnelle souhaitée de la nappe de fibres prétraitée, et des moyens de pressage massifs (4) ; **caractérisé en ce qu'**il prévoit de
- presser la nappe de fibres prétraitée autour des bords extérieurs du moule intérieur tout en autorisant les couches de fibres à glisser ;
- presser ensuite la nappe de fibres prétraitée autour de la forme extérieure du moule intérieur, et
- consolider la préforme par apport de chaleur,
ledit pressage de la nappe de fibres prétraitée autour des bords extérieurs du moule intérieur étant assuré par déplacement (8, 10) d'un moule extérieur (1) ou de parties (4) de celui-ci en direction des bords (9) du moule intérieur, et le pressage de la nappe de fibres prétraitée autour de la forme extérieure du moule intérieur étant assuré par déplacement (8, 10) du moule extérieur (1) ou de parties de celui-ci (4) par rapport au moule intérieur jusqu'à obtention de la forme tridimensionnelle souhaitée.

2. Procédé selon la revendication 1, **caractérisé en ce que** le moule extérieur comprend des parties pivotantes (4) qui sont déplacées autour desdits bords extérieurs du moule intérieur en enserrant la nappe de fibres prétraitée.
